Europäisches Patentamt

European Patent Office

Office européen des brevets

(19)

(11) Publication number: **0 367 392**

**A2**

# (12) EUROPEAN PATENT APPLICATION

(21) Application number: **89309291.6**

(22) Date of filing: **13.09.89**

(51) Int. Cl.⁵: **H04L 12/40**

(30) Priority: **31.10.88 GB 8825438**

(43) Date of publication of application:
**09.05.90 Bulletin 90/19**

(84) Designated Contracting States:
**DE FR IT**

(71) Applicant: **PLESSEY OVERSEAS LIMITED**
**Vicarage Lane**
**Ilford Essex IG1 4AQ(GB)**

(72) Inventor: **Beddoe, Stanley**
**6 Martin Avenue Stubbington**
**Fareham Hampshire(GB)**
Inventor: **Ireland, Robert Sydney**
**59 High Street**
**Bulford Village Salisbury Wiltshire(GB)**

(74) Representative: **Fish, Norman Ernest**
**The Plessey Company plc Intellectual**
**Property Department Vicarage Lane**
**Ilford Essex IG1 4AQ(GB)**

(54) Improvements relating to data transmission systems.

(57) A data transmission system comprises a master control terminal which is connected to a number of intelligent control terminals over a high speed data bus link. Each of these intelligent control terminals is connected to a number of sub-terminals over a low speed data bus link. The master control terminal may transmit high speed (eg. 1MHz bit rate) command signals to selected intelligent control terminals which embody microprocessors for initiating/controlling tasks performed by the associated sub-terminals in accordance with low speed command signals transmitted over the low speed data bus link.

## IMPROVEMENTS RELATING TO DATA TRANSMISSION SYSTEMS

This invention relates to data transmission systems and relates more especially to data transmission systems of the kind eminently suitable for use in aircraft, for example, where a relatively large number of different operational and/or control and/or monitoring functions need to be performed at different speeds. For instance, the actuation of critical control surfaces of the aircraft and the acquisition and display of vital flight information (e.g. altitude) are required to be performed at high speed whereas many other functions, such as the operation of aircraft landing gear, fuel management and other so-called utilities systems (e.g. secondary power for passenger cabin lighting etc) do not necessitate the same level of high speed operation.

Based upon the above realisation, the present invention accordingly provides a data transmission system eminently suitable for use in aircraft, in which a master control terminal is coupled to a plurality of intelligent control terminals over a high speed data bus or link whereas each of the intelligent control terminals is coupled to a plurality of non-intelligent sub-terminals over a low speed data bus or link.

In carrying out the present invention the master control terminal may transmit high speed command data having a bit rate of 1MHz for example, to one or more of the intelligent control terminals over the high speed data bus link to cause the terminal(s) to initiate or terminate the operation/monitoring/data acquisition of various equipment(s) under its control in dependence upon the programming of a computer or microprocessor forming part of the intelligent control terminal. The particular task(s) to be performed by equipment(s) associated with the intelligent control terminal will be initiated/controlled/monitored from ·the latter terminal by means of low speed command data having a bit rate of 6KHz for example, transmitted over the low speed data bus link coupling the non-intelligent sub-terminals to the control terminal and the return of low speed status data having a similar bit rate over the data bus link from the sub-terminal.

As will readily be appreciated, the data transmission system according to the present invention enables all of those functions which may be performed at relatively low speeds to be controlled by the intelligent control terminals in accordance with programmed control instructions transmitted over the low speed data bus links thereby leaving the high speed data bus link which is relatively complex and expensive due to the requisite transmission protocol, resistance matching etc free for control of equipments such as critical control surface actuators to be operated at high speed and the high speed acquisition and display of vital flight data (e.g. altitude), the only communication between the master control terminal and the intelligent control terminals involving somewhat infrequent relatively short command and status data transmissions.

The command and status data transmitted from and received by the master control terminal may comprise first and second transmissions including synchronising, address, data and parity parts. These parts each comprise one or more data bits which may have a bit frequency of the order of 1MHz.

The command and status data which are transmitted between the respective intelligent control terminals and the associated non-intelligent sub-terminals may also comprise synchronising, address and data parts but the bit frequencies of such signals may be of the much lower order of 6KHz. The high speed and low speed data bus circuits include de-coupling and balancing transformers whilst the data links themselves may simply comprise twisted cable pairs. The high speed data bus circuit may also require isolation/matching resistors.

It will be appreciated that the data bus links of the data transmission system according to the present invention could comprise optical paths (e.g. optical fibres) with suitable electronic/optical interfaces being provided at the various terminals and sub-terminals.

By way of example the present invention will now be described with reference to the accompanying drawings in which:

Figure 1 shows a block schematic diagram of an aircraft data transmission system in accordance with the present invention;

Figure 2 shows a block schematic diagram of the low speed data bus part of the data transmission system of Figure 1;

Figure 3 shows an example of low speed data transmission bus circuit arrangement which may be provided between one of the intelligent control terminals of Figure 1 and each of the non-intelligent sub-terminals associated with the intelligent control terminal; and,

Figure 4 shows a circuit arrangement at the intelligent control terminal of Figure 3 which provides for the setting of the address identity of the intelligent control terminal to that of any of the sub-terminals to which command data words are transmitted.

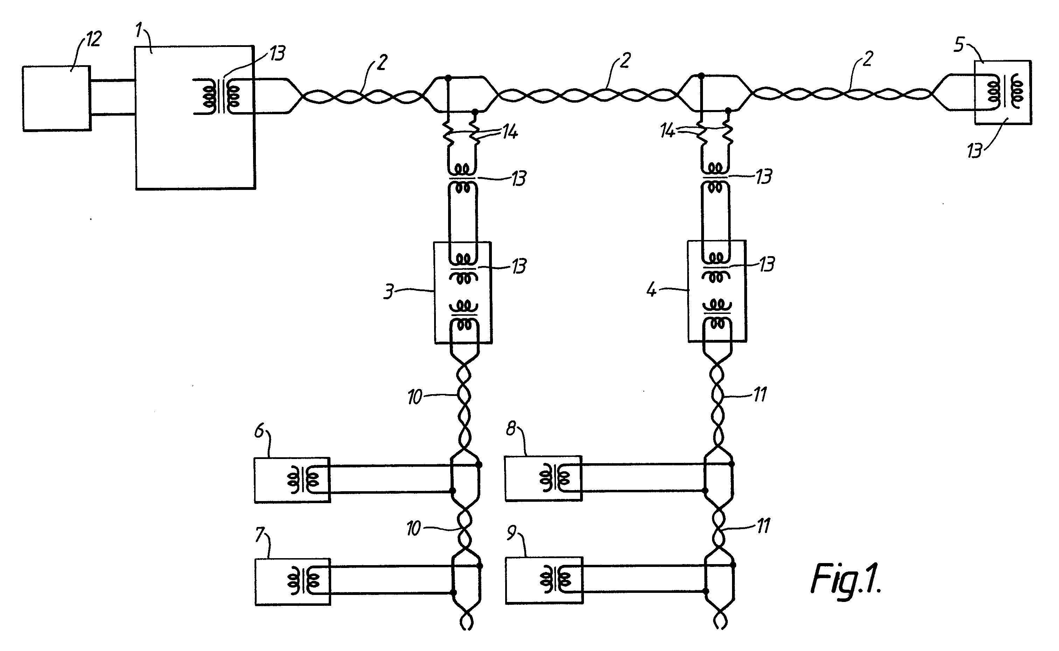

Referring to Figure 1 of the drawings the data transmission system depicted which may advantageously be applied to control/monitoring systems for aircraft comprises a master control terminal 1 which is coupled by means of a high speed data bus link 2 to a plurality of remotely located intelligent control terminals, such as the terminals shown at 3 and 4 in the present example. In practice there may be as many as thirty or more of these intelligent control terminals, each of which has associated with it equipment the speed of operation/control of which is not critical ( e.g. landing gear, fuel control arrangements, secondary power supplies for passenger lighting circuits etc and other aircraft utilities). The high speed data bus link 2 also connects a plurality of other control terminals, such as the terminal 5, which operate/control/monitor (data acquisition) aircraft equipment that either requires to be operated or controlled at high speed (e.g. critical control surfaces of the aircraft) or data provided by the equipment is required to be acquired and fed to the master control terminal 1 at high speed (e.g. aircraft altitude, bearing etc). An automatic pilot computer may also be connected to the high speed data bus for the transmission of data for automatic pilot control of the aircraft. The master control terminal 1 embodies a computer or microprocessor suitably programmed for causing selected or all intelligent control terminals to initiate and control/monitor different aircraft equipments associated therewith and for this purpose the master control terminal will transmit predetermined command data over the high speed data bus link 2 from time to time in order to control operation of the intelligent control terminals. After the transmission of command data and the return of appropriate status data (e.g. on/off) from the master control terminal the intelligent control terminal will be left to control/monitor the associated equipment without requiring continuous data transmission/reception over the high speed data bus link 2. Each of the intelligent control terminals will accordingly be provided with a computer or processor suitably programmed for initiating/controlling/monitoring the functions selectively performed by aircraft equipment (e.g. fuel management, landing gear actuators, auxiliary power supplies) located at or associated with sub-terminals such as those shown at 6 and 7 in respect of intelligent control terminal 3 and those shown at 8 and 9 in respect of terminal 4. Since the speed of operation of the equipment associated with the intelligent control terminals 3 and 4, or the speed of data acquisition from equipment where the monitoring of such equipment is being performed, is not critical the intelligent control terminals, such as the terminals 3 and 4, are coupled to the pairs of sub-terminals 6 and 7 and 8 and 9, respectively, by means of relatively low speed data bus links 10 and 11 which may comprise twisted cable pairs as indicated. By controlling/monitoring the equipment associated with sub-terminals 6, 7, 8 and 9 by command data transmissions over the low speed data bus links 10 and 11 from the intelligent control terminals 3 and 4, the high speed data bus link 2 is left free for most of the time for the transmission of high speed data to and from equipment which needs to be operated at high speed or which provides data required to be instantaneously displayed to and/or acted upon by the pilot who will be provided with control and access to the computer and other equipment of the master controller 1 from pilot control equipment 12.

The master control terminal 1, the intelligent control terminals 3 and 4 and control terminal 5 are coupled/de-coupled as regards AC/DC to and from the high speed data bus link 2 by means of balancing transformers, such as the transformers 13, and isolating/matching resistors, such as the resistors 14, may be introduced into the high speed data bus circuit. As will be appreciated, the transmitting/receiving circuitry and other components connected to the high speed data bus link will, due to the requisite transmission and reception protocol and response times etc, be more sophisticated and complex and thus more expensive than the transmitting/receiving circuitry of the terminals coupled to the low speed data bus link 10. Thus the segregation of the aircraft equipment into slow and high speed categories and the utilisation of the relatively inexpensive low speed data bus links for the operation/control/monitoring of the slow speed category equipment by the intelligent control terminals enables significant cost savings to be achieved and overcrowding of the high speed data bus link to be better avoided.

The data transmission by the master control terminal 1 over the high speed data bus link 2 may simply comprise command words addressed to one or more of the intelligent control terminals and may involve two sequential transmissions having a data bit frequency of 1 MHz. The first of these transmissions may include 1) synchronising part (e.g. three data bits) 2) remote control terminal address (e.g. five data bits) 3) sub-terminal address (five bits) 4) data word (5 bits) and 6) parity data (one bit). The second transmission may comprise 1) synchronising part (three bits) 2) data word (sixteen bits) 3) parity data (one bit). In the case where the command word is a "broadcast command" to be acted on by all the intelligent terminals, a special terminal address will be included in the first transmission from the master control terminal 1. The high speed command data words transmitted over the high speed data bus link 2 will be received by the intelligent control terminals 3 and 4 and the other terminal 5 but will be acted upon by the terminal(s) to which the command data is specifically addressed. The intelligent or other terminal required to act upon the command word may then return a suitably addressed high speed status word over the data bus link 2 to the master control terminal 1. The suitably instructed intelligent terminal will accordingly commence or terminate operation/control/monitoring of low speed aircraft equipment under its control and in the absence of any further command will perform its function(s) independently of the master control terminal 1 and in accordance with functional programs stored in the computer of the intelligent control terminal. This program may well include the switching to reserve or auxiliary equipment or components in the case of primary equipment failure and may not necessarily involve the transmission of equipment failure signals to the master control terminal and the pilot control equipment 12.

Between the infrequent command signals transmitted to the intelligent control terminals high speed data signals will be transmitted between the master control terminal 1 and other control terminals or equipment comprising fast response equipment (e.g. critical control surfaces) required for aircraft guidance purposes or for the spontaneous updating of vital flight information (e.g. altitude, bearing etc) displays.

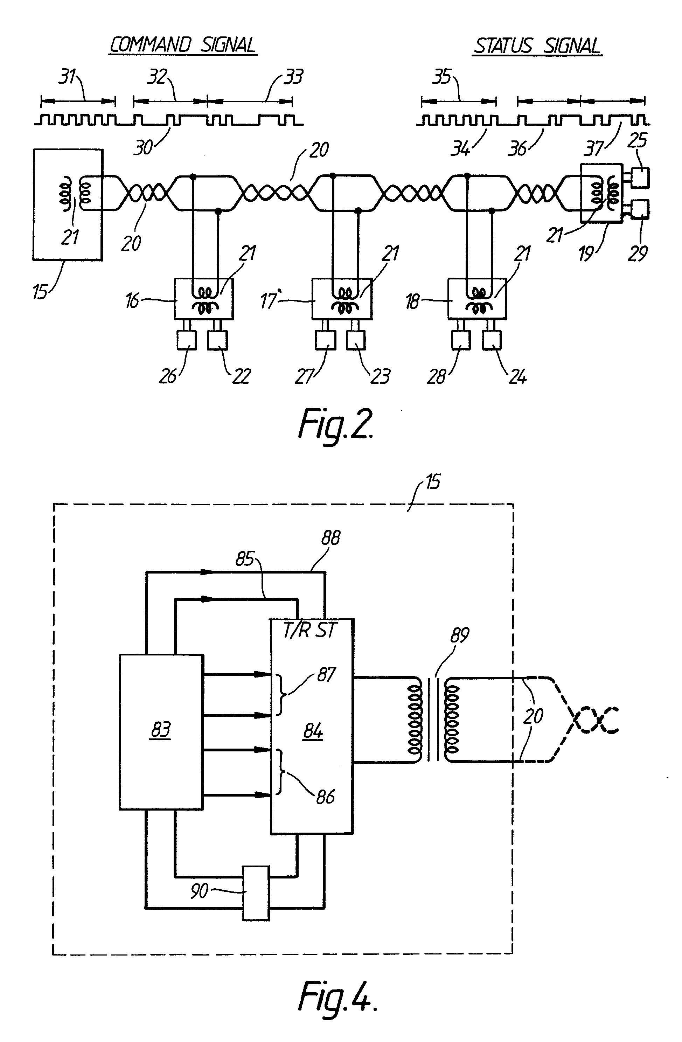

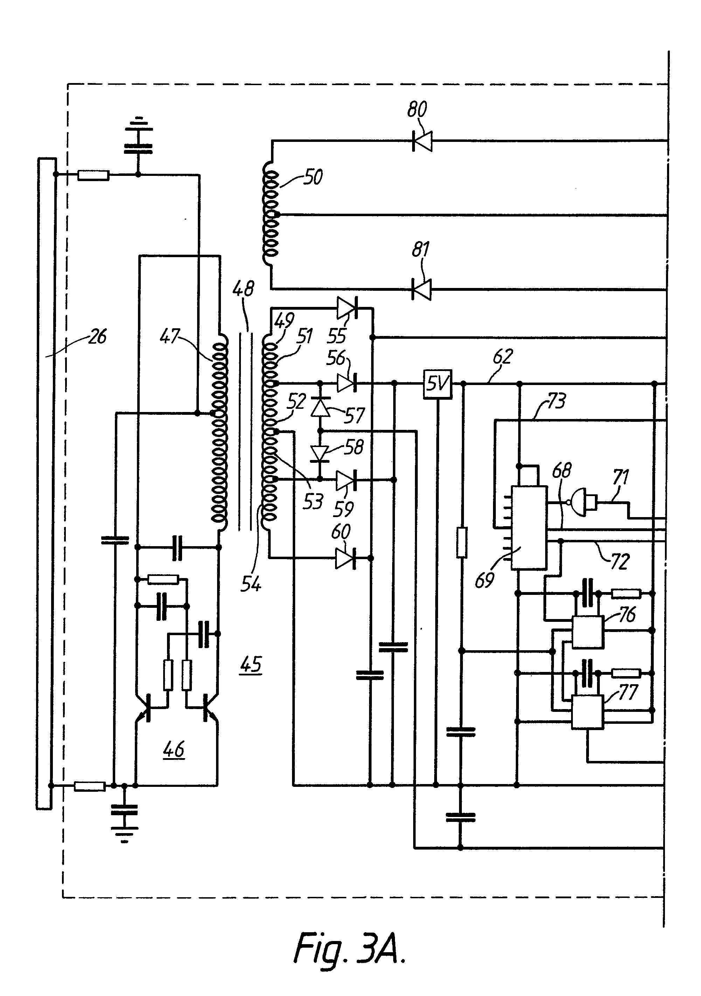

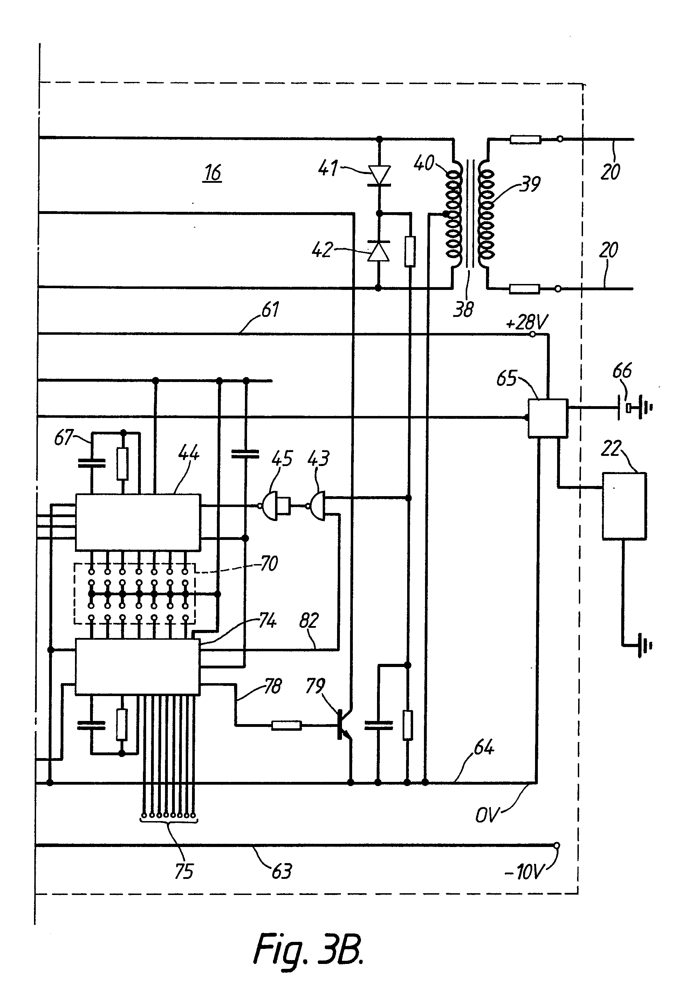

By way of example reference will now be made to Figure 2 and Figure 3 of the accompany drawings which show a block schematic diagram for the low speed data part of the data transmission system of Figure 1 and a receiving/transmitting circuit arrangement provided at each of the sub-terminals of the system Figure 1, respectively.

The low speed data transmission arrangement shown in Figure 2 is of the same form as that described in our co-pending Patent Application No. (F20597). Referring to Figure 2 of the drawings the data transmission arrangement shown comprises an intelligent control terminal 15 (corresponding to one of the intelligent control terminals 3 and 4 of Figure 1) which is connected to a number of remote sub-terminals 16, 17, 18 and 19 (each corresponding to one of the sub-terminals 6 and 7 or 8 and 9 of Figure 1) by means of a slow speed data bus link 20 preferably comprising a twisted pair of conductors, as shown. The intelligent control terminal and sub-terminals are coupled to the data bus link by means of respective de-coupling and balancing transformers 21. In the present embodiment the sub-terminals 16 to 19 include power supply switching circuits to be described with reference to Figure 3 which control the connection/disconnection of local DC power supplies to/from loads 22, 23, 24 and 25 which may, for example, comprise aircraft landing gear actuators, auxiliary lighting circuits or fuel pump operating circuits etc. Each of the power supply switching circuits is itself powered from an isolated DC power supply derived from a local DC power supply 26, 27, 28 or 29 through a DC-DC convertor and is arranged to be selectively controlled in accordance with a command data word transmitted over the data bus link 20 from the intelligent control terminal 15. The control terminal 15 includes a computer which is suitably programmed so as to produce a predetermined program for the operation of the loads controlled by the supply switching circuits at the respective remote terminals 16 to 19.

For the purpose of selectively controlling (e.g. closing or opening) the local supply switching circuits the control terminal 15 produces appropriate command data words, such as that shown at 30. This data word includes a preamble or synchronising part 31 comprising bursts of AC contained within a series of square wave pulses. This preamble or synchronising part 31 is followed by a data part including an address 32 comprising encoded (Manchester code) bursts of AC and a command part 33 also comprising encoded (Manchester code) bursts of AC within rectangular wave pulses.

These command data words would be generated by the intelligent control terminal 15 in accordance with a computer controlled operating program for the loads 22 to 25 associated with the respective remote terminals 16 to 19. Each command data word, such as the command data word 30 is applied to the data bus link 20 through the de-coupling and balancing transformer 21 and this word will be received by all the remote sub-terminals 16 to 19 through the de-coupling balancing transformers 21 at the respective remote sub-terminals. Each of these remote sub-terminals is provided with an isolated DC supply for operating the receiver/transmitter thereof by means of a DC-DC convertor connected to one of the DC supplies 26 to 29. The frequency of the preamble and address and data bits of the command words will be of the order of 6KHz to provide a relatively low speed transmission system.

The synchronising part 31 of the data command word 30 will cause a phase-locked loop of clock pulse generating means of data de-coding/receiver means at the respective remote sub-terminals 16 to 19 to become synchronised to the pulse bit rate (i.e. 6KHz) of the incoming data word. After such clock pulse synchronisation has been achieved the remote sub-terminal address information 32 of the incoming data word 30 arrives at the data word de-coding/receiving means of the respective remote sub-terminals and this address information will effectively be sampled by the receiver means at all of the remote sub-terminals. The receiver means at the particular sub-terminal which recognises the address identity of the command data word 30 as its own will be activated in readiness for acting on the data information 33 which follows, whereas the receiver means of all the other remote sub-terminals will effectively remain inactive as regards response to the reception of the data information of the incoming data word.

The data information 33 will be acted on by the addressed remote sub-terminal concerned by the connection to or disconnection from the load 22, 23, 24 or 25 of a local DC supply. The switching of the load to or from the local DC supply may be effected by means of a solid state switch (e.g. MOSFET).

When the particular instruction(s) of the command data word has been carried out at the addressed sub-terminal 16, 17, 18 or 19 a status data word, such as the word indicated at 34, will be generated by transmitter means at the remote sub-terminal concerned for transmission to the intelligent control terminal 15 over the data bus link 20 and via de-coupling transformers 21. This status data word comprises a synchronising part 35 for enabling clock pulse producing means at the intelligent control terminal 15 to become synchronised to the bit rate of the incoming sub-terminal status data word. This synchronising part is followed by sub-terminal address information 36 corresponding to the address of the remote sub-terminal generating the status word and status information 37 appertaining to the load located at or associated with remote sub-terminal. The frequency or bit rate of the preamble, address and status information will be of the order of 6KHz. As the command data word is generated by the intelligent control terminal 15 status word receiving/de-coding means at the control terminal 15 is conditioned in readiness for responding to a status word having the address of the particular sub-terminal concerned. Thus, each time a command word is generated by the intelligent control terminal 15, the address of the control terminal will effectively correspond to each addressed remote sub-terminal in readiness for receiving the status data word from such sub-terminal when the latter has acted upon the command data word. This procedure obviates the need for the data information of the status data word to include the identity of the remote sub-terminal, as when the intelligent control terminal 15 has the same address from all the remote sub-terminals and thereby facilitates a significant reduction in the number of data bits required in the data part of the status data word.

Referring now Figure 3 of the drawings, this shows a receiver/transmitter circuit arrangement provided at each of the respective remote sub-terminals 16 to 19 in Figure 2. The designations used correspond to those used for the remote-sub terminal 16 in Figure 2 coupled in common with the other sub-terminals to the intelligent control terminal 15 over the data bus link 20.

A command data word, such as the word 30 (Figure 2) generated by the intelligent control terminal 15 and fed to the data bus link 20 through a de-coupling transformer 21 will be received by the station 16 through the de-coupling and balancing transformer 38 having an un-tapped winding 39 and centre-tapped winding 40. The centre-tapped winding 40 has connected across it a pair of oppositely-poled rectifiers 41 and 42 the junction point between the rectifiers being connected to one input of a NAND gate 43 which, during the reception of a command data word, is open to allow the incoming word to pass through it to an integrated signal receiver de-coder circuit 44 via an inverter 45 which effectively combines with the NAND gate 43 to define an AND gate. It may here be mentioned that during the transmission of status data words to the intelligent control terminal 15 (Figure 2) this gate 43 will be closed to prevent the status word being received by the receiver/de-coder 44. The receiver/transmitter circuit arrangement of Figure 3 is supplied with isolated DC power from the local power supply 26 through a DC-DC convertor 45 comprising a conventional transistor oscillator 46 which is connected to the DC power supply 26 and which continuously produces AC output signals (100-200KHz) across the centre-tapped primary winding 47 of an isolating transformer 48 having two secondary windings 49 and 50. Secondary winding 49 is provided with a number of tapped portions 51, 52, 53 and 54 having rectifiers 55, 56, 57, 58, 59 and 60 suitably associated therewith to provide isolated DC voltages of + 28V on line 61, + 5V on line 62,-10V on line 63 and 0V on line 64, for the operation of the receiver/transmitter components. However, oscillator 46 not only forms part of the DC-DC convertor 45 to provide isolated DC voltages for operating the receiver/transmitter circuit arrangement and controlling the operation of a switch 65 for connecting/disconnecting the load 22 to/from DC supply 66 but it also provides a continuous AC signal of 100-200KHz across the centre-tapped secondary winding 50 of the isolating transformer 48. This AC signal derived from the oscillator 45 is used in producing status data words as will hereinafter be fully described. Reverting now to the operation of receiver 44, on arrival of the command data word the synchronising part 31 of word 30 (Figure 2) causes a clock pulse circuit 67 for the circuit 44 to become synchronised with the bit rate of the synchronising part of the data word. The preamble or synchronising part is fed over line 68 into a shift register 69 which is stepped accordingly but latched to inhibit any output from the register at this stage. The following coded sub-terminal address of the data word is compared by the receiver 44 with a remote sub-terminal address input at 70. The address code is fed over the line 68 to the shift register 69 which is stepped under the control of clock pulses on line 71 but still remains latched. The command data bits of the word 30 also pass through the receiver 44 to the shift register 69 over the line 68 and the shift register again steps under control of clock pulses on line 71. If the sub-terminal address codes of the data word and remote sub-terminal match, then the circuit 44 produces a strobe output on output line 72 which causes the shift register 69 to provide an output on line 73 by unlatching of register 69. If the address codes do not match then no strobe signal is applied to the shift register 69 for the unlatching thereof.

Assuming that the address codes match, the output from the shift register 69 in its final stepped position provides an output signal on the line 73 which is applied to the solid state switch (e.g. MOSFET) 65 which is switched on or off according to the command data information 33 from the intelligent control terminal 15 (Figure 2). Assuming that the command data information is to connect the load 22 to the DC supply 66 then the switch 65 will be turned on by the + 28 volt isolated supply on line 61. The shift register 69 however, will remain in the position to which it was finally stepped until the next command data word is received from the control terminal 15 over the data bus link 20.

When the load 22 has been connected to or disconnected from the DC supply 66, the transmitter 74 having the on/off condition of the load 22 identified to it by a status input word applied to a group of status word inputs 75 will be activated after a predetermined time delay by means of an input signal from the respective timing and pulse-producing circuits 76 and 77. A pulse output corresponding to the load status and preceded by a series of pulse corresponding to a preamble and a series of pulses corresponding to the remote sub-terminal address for accordingly be applied over line 78 to the base of a transistor 79 to render the transistor alternately conducting and non-conducting. When the transistor 79 conducts it effectively extends the 0V line 64 to the centre-tapping of the winding 50 of the isolated transformer 48 and by so doing it completes the circuit for the AC signal continuously applied to the centre-tapped winding 50 to be extended via the rectifiers 80 and 81 to the centre tapped winding 40 of the de-coupling/balancing transformer 38. Bursts of AC signal will accordingly be induced in the winding 39 of the de-coupling transformer and will be applied to the data bus link 20. At the same time an inhibit output from the transmitter 74 on line 82 will close the gate 43 to prevent the status data word applied to the de-coupling transformer winding 40 from being fed back into the receiver 44 through the rectifiers 41, 42, gate 43 and the invertor 45.

The status word applied to the data bus link 20 will be received by the intelligent control terminal 15 (Figure 2) which will be provided with a receiver/transmitter generally similar to that indicated 44 in Figure 3.

Referring now to Figure 4 of the drawings, this shows a circuit arrangement at the intelligent control terminal 15 which provides for the setting of the address identity of the terminal to conform to that of any remote sub-terminal to which a command word is transmitted.

The intelligent control terminal 15 includes a microprocessor 83 which will be programmed to provide an operational program for the supply switching circuits at the respective sub-terminal 16 to 19 and their associated loads 22 to 25.

When the intelligent control terminal 15 is required to transmit a command data word to any of the remote sub-terminals, the transmitter/receiver 84 is caused to assume the transmit mode by the application of a logic signal on the line 85. The address code 31 (see Figure 2) of the remote sub-terminal concerned will be set up in the transmitter 84 by a code signal applied to the group of address lines 86. The command data or information will then be set up by code signals applied to the group of data lines 87 following which a start pulse will be applied to the transmitter 84 over line 88 to cause the control terminal 15 to transmit the appropriate command data word, including a synchronising part, over the data bus link 20 through the de-coupling transformer 89. To achieve this, the control terminal 15 may include an oscillator corresponding to the oscillator 46 of Figure 3 for providing bursts of AC (100-200KHz) in the generation of a command data word.

After the expiration of a predetermined time interval, the condition of the transmitter/receiver 84 is changed to the receive mode by a different logic signal on line 85. Thereafter the operation of the circuit 84 is similar to that of the receiver circuit 44 in Figure 3 with the associated shift register corresponding to 69 in Figure 3 being shown at 90 for applying the received status data bits of a returned status word from a remote sub-terminal to the microprocessor 83 for monitoring and processing purposes. As in the case of the receiver 44 which compares the address of incoming data with its own address identity, address bits of the status word returned from the remote sub-terminal will be compared with the address set-up in the transmitter/receiver 84 when switched to the transmit mode before the shift register 90 is rendered operative for passing the incoming data bits to the microprocessor 83.

As will readily be appreciated from the foregoing description in connection with Figure 1, the intelligent control terminal 15 will from time to time receive high speed data commands from the master control terminal 1 (Figure 1) and these commands will be acted upon by the intelligent control terminals to produce selective or combined operation of respective loads associated with the sub-terminals in accordance with programmed data stored in the microprocessor 83. Since these loads may be operated at relatively low speeds, the data bus 20 connecting the intelligent terminal 15 to the sub-terminals is a low speed data bus link having a data bit rate frequency of about 6KHz as compared to a data bit rate of 1MHz for data transmissions over the high speed data bus link 2 (Figure 1) connecting the master control terminal 1 to the intelligent control terminals 3 and 4 and the other terminal 5.

As regards to the low speed data transmission arrangement shown in Figure 2 attention is also directed to our co-pending Patent Application No. 8810568 (F20487) which describes an arrangement in which status signal oscillator circuits located at respective remote terminals connected to a control terminal by means of a low speed data bus form part of tuned circuits and which may, in the case of the present embodiment, be utilised for determining the frequency of the AC burst signals transmitted between the intelligent control terminals and their associated sub-terminals connected to the intelligent control terminals over low speed data bus links.

Although in the particular embodiment described the data transmission system is applied to aircraft it will of course be appreciated that the system could be applied to ships and land-based vehicles etc.

## Claims

1. A data transmission system in which a master control terminal is coupled to a plurality of intelligent control terminals and one or more additional terminals over a high speed data bus link whereas each of the intelligent control terminals is coupled to a plurality of non-intelligent sub-terminals over a low speed data bus link.

2. A data transmission system as claimed in claim 1, in which data transmissions over the high speed data bus link have a data bit rate frequency of the order of 1 MHz whilst data transmissions over the low speed data bus link have a data bit rate frequency of the order of 6KHz.

3. A data transmission system as claimed in claim 1 or claim 2, in which the high speed and low speed data bus links comprise twisted pair cables with de-coupling and balancing transformers being connected between one of the twisted pair cables and the master control terminal and the intelligent control terminals and additional terminal(s) on the one hand and between the other twisted pair cables and the appertaining intelligent control terminals and their associated non-intelligent sub-terminals on the other hand.

4. A data transmission system as claimed in any preceding claim, in which the master control terminal comprises transmitter means for transmitting high speed command data words over the high speed data bus link to at least one of the intelligent control terminals to initiate or terminate the operation/monitoring/data acquisition of various equipment(s) under its control, and in which the particular task(s) to be performed by equipment(s) associated with the intelligent control terminal will be initiated/controlled/monitored from the latter terminal by means of low speed command data words transmitted by transmitter means of the intelligent control terminal over the low speed data bus link to at least one of the non-intelligent sub-terminals.

5. A data transmission system as claimed in claim 4, in which the master control terminal includes a computer or microprocessor suitably programmed for selectively initiating or terminating the control of equipments at the sub-terminals by the intelligent control terminals and in which the intelligent control terminals include computers or microprocessors suitably programmed for selectively controlling the operation of equipments at the sub-terminals independently of the master control terminal.

6. A data transmission system as claimed in claim 4 or claim 5, in which the intelligent control terminals are arranged to transmit high speed status data words back to the master control terminal in response to the execution of command words addressed to them.

7. A data transmission system as claimed in any of claims 4 to 6, in which each of sub-terminals is arranged to transmit low speed status data words back to the intelligent control terminal with which it is associated in response to the execution of command data words received over the low speed data bus link.

8. A data transmission system as claimed in any preceding claim, in which the or each of the additional terminals coupled to the master control terminal over the high speed data bus link has equipment associated with it which needs to be operated/monitored/controlled at relatively high speed compared to equipment(s) associated with the sub-terminals coupled to the intelligent control terminals over the low-speed data bus link.

9. A data transmission system as claimed in any preceding claim, in which the data words transmitted over the high speed and low speed data bus links comprise bursts of AC (e.g. 100-200KHz) defining synchronising, terminal address and command/status data parts.

10 A data transmission system as claimed in claim 1, in which the high and low speed data bus links comprise optical paths (e.g. optical fibres) with electronic/optical interfaces being provided at the various terminals and sub-terminals.

11. An aircraft data transmission system as claimed in any preceding claim, in which the or each of the additional terminals comprises or has associated with its equipment (e.g. critical control surface actuators, altimeters etc) which need to be operated/controlled/monitored at high speed and in which the sub-terminals comprise or have associated with their equipment (e.g. landing gear actuators, secondary lighting circuits etc) which may be operated/controlled/monitored at relatively low speeds.

12. An aircraft data transmission system as claimed in claim 11, in which the pilot has access to the master control terminal for overriding control of equipment and data acquisition etc.

Fig.1.

COMMAND SIGNAL

STATUS SIGNAL

Fig.2.

Fig.4.

*Fig. 3A.*

*Fig. 3B.*